# EUROPEAN PATENT APPLICATION

(11) **EP 2 587 629 A1**
(43) Date of publication of application: **01.05.2013**
(21) Application number: 10854055.0
(22) Date of filing: 28.06.2010
(51) Int. Cl.: H02J 17/00

(54) **NON-CONTACT ELECTRIC POWER FEEDING DEVICE**

(71) Applicant: Showa Aircraft Industry Co., Ltd., Tokyo 196-0014 (JP)
(72) Inventor: YAMAMOTO Kitao, Akishima-shi Tokyo 196-0014 (JP); SATO Takeshi, Akishima-shi Tokyo 196-0014 (JP); ABE Keisuke, Akishima-shi Tokyo 196-0014 (JP); MOCHIZUKI Masashi, Akishima-shi Tokyo 196-0014 (JP); OKIYONEDA Yasuyuki, Akishima-shi Tokyo 196-0014 (JP)
(74) Representative: Piésold, Alexander James
(86) International application number: PCT/JP2010/060954
(87) International publication number: WO 2012/001758

(57) **Abstract**

A non-contact power feeding device A is provided to feed power from a primary coil 7 on a primary side 1 to a secondary coil 8 on a secondary side 2, which are closely located to face each other with no contact through an air gap g, based on a mutual induction effect of electromagnetic induction. In such a non-contact power feeding device A, a repeating resonant coil 30 constituting a resonant circuit 29 is disposed in a magnetic path of the air gap g. This resonant circuit 29 is independent of a power circuit 12 on the primary side 1 and a load side circuit 24 on the secondary side 2 and is provided with the repeating resonant coil 30 and a capacitor 31. In the case of power feeding, the repeating resonant coil 30 of the resonant circuit 29 feeds exciting reactive power to the magnetic path of the air gap g.

## Description

### BACKGROUND OF THE INVENTION

### 1. Field of the Invention

The present invention relates to a non-contact power feeding device, and more particularly to a non-contact power feeding device which feeds power to a secondary side mounted on an electric vehicle and the like from a primary side, for example, fixedly grounded.

### 2. Technological background

A non-contact power feeding device adapted to feed power to a battery of, for example, an electric vehicle from outside without any mechanical contact such as a cable has been developed based on the demand and this device is in practical use.

In this non-contact power feeding device, the power is fed through an air gap to a secondary coil on a secondary side which is a power receiving side from a primary coil on a primary side which is a power feeding side, based on a mutual induction effect of electromagnetic induction.

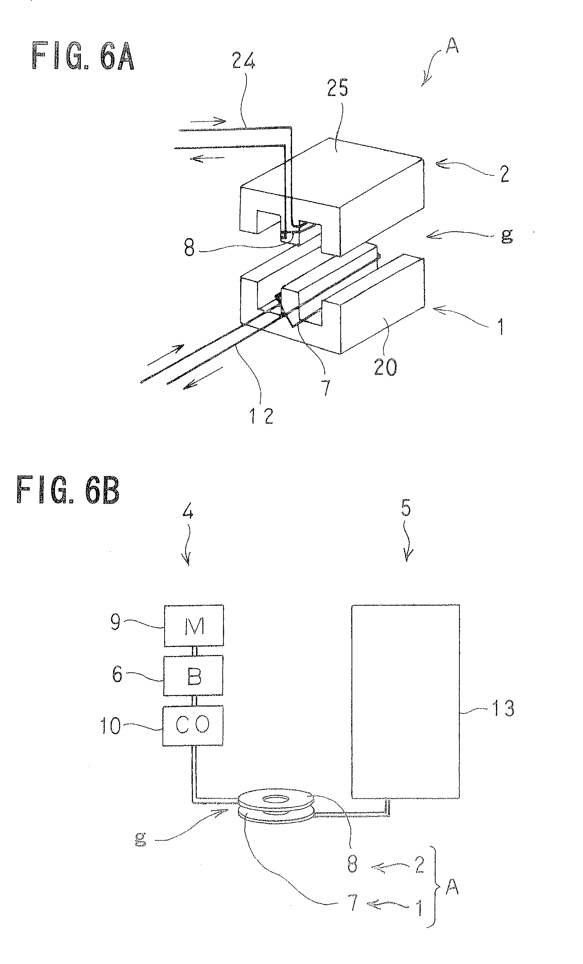

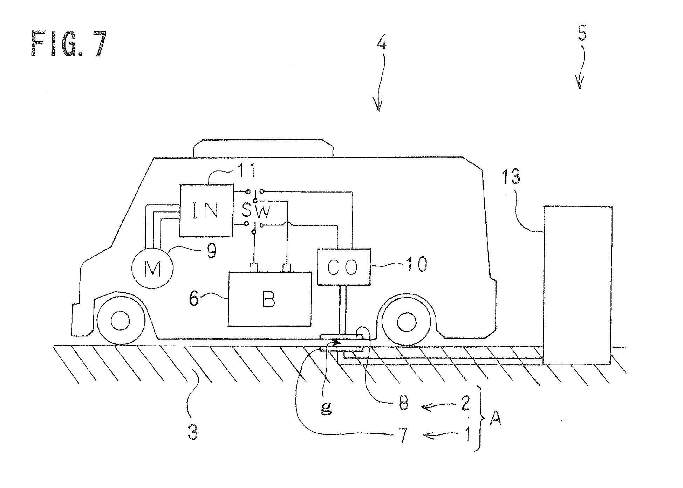

In other words, the non-contact power feeding device causes the secondary coil mounted on the electric vehicle etc. to generate the induced electromotive force by formation of a magnetic flux in the primary coil fixedly grounded, thereby feeding power (refer to Figs. 6 and 7 described later).

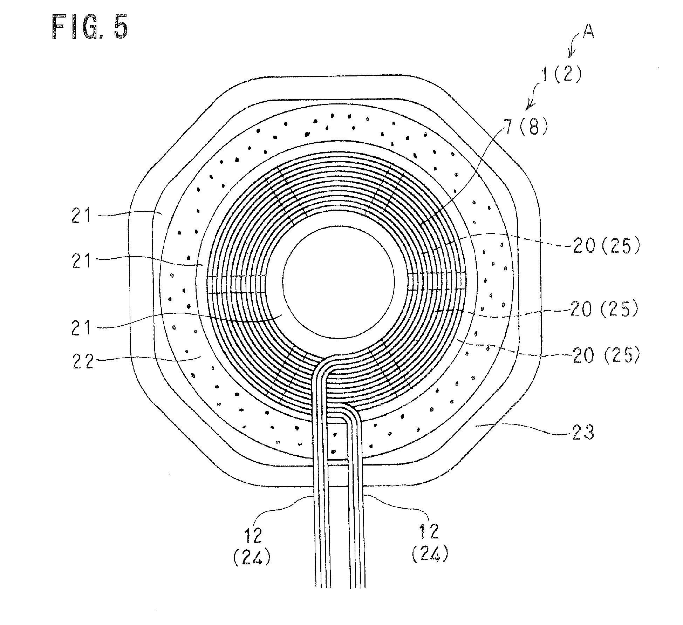

In such a non-contact power feeding device, the needs such as improvement of charging efficiency, supply of a large amount of power, expansion of the air gap and a compact and weight saving model are increasing. It is also to be noted that development and practical application of a coil with a flat structure to be used in the non-contact power feeding device are advancing recently (refer to Figs. 5 and 6B).

### 3. Description of the Prior Art

### (Patent Documents)

Such a non-contact power feeding device of a conventional technology is disclosed, for example, in the following patent documents 1 and 2.
[Patent Document 1] Japanese Unexamined Patent Publication No. 2008-087733; and
[Patent Document 2] Japanese Unexamined Patent Publication No. 2010-035300

### 4. Problems to be solved by the Invention

It has been pointed out that it is not easy for a conventional non-contact power feeding device of this kind to feed a large amount of power through a large air gap.

In other words, expansion of the air gap greatly contributes to the promotion of the non-contact power feeding device, but it is necessary to increase an exciting reactive power. In order to feed a large amount of power through the large air gap, it is necessary to generate a matching magnetic flux in a magnetic path. In short, it is necessary to increase the exciting reactive power input into the primary coil and the secondary coil.

The exciting reactive power is expressed as "coil voltage x coil current". In the case of increasing the exciting reactive power, in order to avoid the increase of Joule heat loss due to copper loss increase, it is necessary to limit the current to increase the voltage.

In this manner, for expansion of the air gap, it is necessary to increase the exciting reactive power and for increase of the exciting reactive power, it is necessary to make the coil voltage higher than 600V in the conventional technology. In such a conventional technology, making the coil voltage higher means that it is necessary to make not only the coil voltage higher, but also to make the voltage of the parts used in the overall device including a cable and a power source for feeding power to the coil higher.

In other words, for such a conventional non-contact power feeding device, it has been pointed out that the parts used on the primary and secondary sides are not for a low voltage, but for a high voltage in excess of a rated voltage of 600 V and the production, installation, maintenance, etc. as well as the insulation work, resulting in a high cost.

### SUMMARY OF THE INVENTION

### 1. Present Invention

A non-contact power feeding device of the present invention was developed to solve the problems of the conventional technology of this kind stated above.

It is therefore an object of the present invention to provide an improved non-contact power feeding device in which, first, a larger gap can be realized without making the voltage of the primary and secondary sides higher and, second, the first point can be advantageously realized without difficulty in cost and other respects.

### 2. Means for solving the problems

A technical means of the present invention for solving these problems is described below.

### (Aspect 1)

A non-contact power feeding device is provided, in which power is fed from a primary coil of a power circuit on a primary side to a secondary coil of a load side circuit on a secondary side, which are closely located to face each other with no contact through an air gap, based on a mutual induction effect of electromagnetic induction.

The non-contact power feeding device is characterized in that a resonant coil constituting a resonance circuit is disposed in a magnetic path of the air gap.

### (Aspect 2)

The non-contact power feeding device according to aspect 1 is provided, in which the resonant circuit is independent of the power circuit on the primary side and the load side circuit on the secondary side and the resonant coil of the resonant circuit feeds exciting reactive power to the magnetic path of the air gap. The non-contact power feeding device is characterized in that the resonant circuit can independently be subjected to a high voltage and be provided with insulation.

### (Aspect 3)

The non-contact power feeding device according to aspect 2 is provided, in which the primary coil and the secondary coil are spirally wound to provide a circular flat structure with a round or square shape. A magnetic core on the primary side and the secondary side is provided to form a similar flat structure. The resonant coil is also provided to form a similar flat structure.

The non-contact power feeding device adopts a stop-type power feeding method whereby the secondary coil is located to stop facing the primary coil in the case of power feeding.

### (Aspect 4)

The non-contact power feeding device according to aspect 3 is provided, in which the resonant coil is disposed on the primary coil side.

### (Aspect 5)

The non-contact power feeding device according to aspect 3 is provided, in which the resonant coil is disposed on the secondary coil side.

### (Aspect 6)

The non-contact power feeding device according to aspect 3 is provided, in which the resonant coil can be disposed in an approximately intermediate position between the primary coil and the secondary coil.

### (Aspect 7)

The non-contact power feeding device according to aspect 3 is provided, in which the resonant circuit is disposed on both the primary coil side and the secondary coil side.

### (Aspect 8)

The non-contact power feeding device according to aspect 3 is provided, in which the resonant coil is provided in such a manner that the winding diameter is made larger than that of the primary coil.

### (Aspect 9)

The non-contact power feeding device according to aspect 3 is provided, in which the resonant coil is provided in such a manner that the winding diameter is made larger that of the secondary coil.

### (Aspect 10)

The non-contact power feeding device according to aspect 3 is provided, in which the power circuit on the primary side is fixedly grounded or provided on another part above ground, while the load side circuit on the secondary side is mounted on a vehicle or other movable body.

### 3. Operation etc.

The present invention consists of the technical means described above. Operation etc. of the present invention will now be described in the following (1) through (10).
(1) In the non-contact power feeding device, the secondary coil on the secondary side is located to face the primary coil on the primary side through an air gap in the case of power feeding.
(2) When applying current to the primary coil, a magnetic flux is formed and a magnetic path of the magnetic flux is formed between the primary coil and the secondary coil.
(3) In this manner, the primary coil and the secondary coil are electromagnetically coupled to generate induced electromotive force on the secondary coil.
(4) In the non-contact power feeding device, electric power is fed from the primary side to the secondary side by a mutual induction effect of such electromagnetic induction.
(5) In the non-contact power feeding device of the present invention, a resonant coil of an independent resonant circuit is provided in a magnetic path of the air gap.
(6) The exciting reactive power is fed to the magnetic path of the air gap from the resonant coil.
(7) When the large amount of power is fed through a large gap, it is necessary to increase the exciting reactive power. In the present invention, the increase of such exciting reactive power can be realized by making only the voltage of the independent resonant circuit high.
(8) In the present invention, the increase of such exciting reactive power can be readily realized by the resonant circuit of a simple structure. The resonant circuit can also be insulated without difficulty. Since the resonant coil of the resonant circuit is composed of a flat structure, it can be readily combined and disposed between the primary coil and the secondary coil which are also composed of the similar flat structure.
(9) In the case where the winding diameter of the resonant coil of the resonant circuit is made larger than that of the primary coil or/and the secondary coil, the magnetic path of the air gap widens and as a result, the tolerance for displacement between the primary coil and the secondary coil becomes wider.
(10) The non-contact power feeding device of the present invention has the following effects.

### 4. Effects of the Invention

### (First effect)

First, in the present invention, a large gap can be realized without making the voltage of the primary and secondary sides higher.

In the non-contact power feeding device of the present invention, a resonant coil of a resonant circuit is disposed, as a third coil, in a magnetic path of an air gap between the primary coil and the secondary coil to feed exciting reactive power from the resonant coil. Namely, the increasing needs of the exciting reactive power according to feeding of a large amount of power through a large air gap can be met by making only the voltage of the resonant circuit partially higher without making the overall voltage higher as seen in the conventional technology of this kind.

In the conventional technology, it is necessary to make higher the voltage of the parts used in the entire device including a cable and power source as well as the voltage of the primary and secondary coils. On the contrary, in the present invention, it is possible to meet the needs of the increase of exciting reactive power by making only the voltage of the independent resonant circuit higher.

In this manner, according to the present invention, it is possible to open a gate for feeding a large amount of power through a large air gap. For example, a large amount of power of an order of several kW can be fed, even through an air gap larger than 300 mm.

### (Second effect)

Second, in the present invention, the first effect can be advantageously realized without difficulty in cost and other aspects.

In the non-contact power feeding device of the present invention, the first effect described above can be realized by adopting the resonant circuit of a simple structure consisting of a resonant coil and a capacitor independently of other circuits.

In the conventional technology of this kind described above, it is necessary to make the voltage of both the primary and secondary sides totally higher and various costs for production, installation and maintenance as well as measures against insulation pile up. In the present invention, it is only necessary to partly take measures against high voltage and insulation concerning only the independent resonant circuit of a simple structure and as a result, it is possible to greatly reduce costs as compared to the conventional technology.

Further, in the present invention, since the resonant coil of a flat structure is combined between the primary and secondary coils of the similar flat structure, disposition can be made smooth.

Still further, in the case where the winding diameter of the resonant coil is made larger than that of the primary coil or/and the secondary coil, the tolerance of displacement between the primary and secondary coils becomes wider. Even from this aspect, a non-contact power feeding system can be promoted.

As described above, the present invention has a great effect in that all the problems of the conventional non-contact power feeding device of this kind can be solved.

### BRIEF DESCRIPTION OF THE DRAWINGS

The above and other objects, features and advantages of the present invention will become more apparent from the following description when taken in conjunction with the accompanying drawings.
Fig. 1 is an explanatory circuit diagram provided to describe a preferred embodiment for providing a non-contact power feeding device according to the present invention, wherein Fig. 1A is a first embodiment and Fig. 1B is a second embodiment;
Fig. 2 is an explanatory circuit diagram provided to describe a preferred embodiment for carrying out the present invention, wherein Fig. 2A is a third embodiment and Fig. 2B is a fourth embodiment;
Fig. 3 is an explanatory circuit diagram of a main part provided to describe a preferred embodiment for carrying out the present invention, wherein Fig. 3A is one embodiment of a conventional technology; Fig. 3B is another embodiment of the conventional technology, and Fig. 3C is an embodiment of the present invention;
Fig. 4 is an explanatory circuit diagram provided to describe a preferred embodiment for carrying out the present invention, wherein Fig. 4A shows a conventional technology and Fig. 4B is an embodiment of the present invention;
Fig. 5 is an explanatory plan view of a coil and the like provided to describe the non-contact power feeding device;
Fig. 6 is provided to generally describe the non-contact power feeding device, wherein Fig. 6A is an explanatory perspective view of the coil and the like and Fig. 6B is a block diagram to which the coil and the like have been applied; and
Fig. 7 is an explanatory side view of an embodiment to which the non-contact power feeding device has been applied.

### DETAILED DESCRIPTION OF THE PREFERRED EMBODIMENTS

A preferred embodiment of the present invention will now be fully described hereunder.

### (General structure of the non-contact power feeding device A)

A general structure of a non-contact power feeding device A is described with reference to Figs. 6B and 7.

The non-contact power feeding device A is provided to feed electric power from a primary side 1 to a secondary side 2, which are closely located to face each other with no contact through an air gap g, based on a mutual induction effect of the electromagnetic induction. The primary side 1 is fixedly secured to the ground 3 or the like, while the secondary side 2 is mounted on a moving body such as an electric vehicle 4.

The non-contact power feeding device A will be described in detail. First, the primary side 1, that is, a power feeding side or a track side is fixedly secured to the ground 3, a road surface, a floor surface or another part above ground in a power feeding stand 5, a power feeding corner or other power feeding areas.

On the contrary, the secondary side 2, that is, a power receiving side or a pickup side is mounted on an electric vehicle 4 such as an electric car or an electric train, or other moving body. For the moving body, various transport systems, a cart system, an amusement facility or a conveyance system for a factory, etc. can also be considered. The secondary side 2 is available for both driving and not driving such a moving body. Further, the secondary side 2 is typically connected to a car-mounted battery 6, but it can also be considered that the secondary side 2 is connected directly to various loads.

In the case of power feeding, the primary coil 7 and the secondary coil 8 are closely located to face each other with no contact through an air gap g of which the size is, for example, between 50 mm and 150 mm, or above 150 mm or 300 mm.

Further, in the case of power feeding, as shown in Figs. 6b and 7, a stop-type power feeding method is typical whereby the secondary coil 8 is located to stop above the primary coil 7, but it is also possible to adopt a moving type power feeding method whereby the second coil 8 travels above the primary coil 7 at a low speed. In the case of the stop-type power feeding method, the primary coil 7 and the secondary coil 8 are vertically provided to have a symmetric structure.

Referring to Figs. 6b and 7, the secondary coil 8 is connected to a car-mounted battery 6, wherein a motor 9 for traveling is driven by the battery 6 charged in power feeding operation. Reference numeral 10 is a converter for converting an alternating current to a direct current and 11 is an inverter for inverting the direct current to the alternating current.

The general structure of the non-contact power feeding device A is described as above.

### (Mutual induction effect)

Next, an outline of a mutual induction effect of electromagnetic induction will now be described with reference to Fig. 6A.

In the non-contact power feeding device A, feeding of electric power based on a mutual induction effect of electromagnetic induction is publicly known and used. In other words, it is publicly known and used in the case of power feeding whereas, between the primary coil and the secondary coil which are located to face each other, formation of a magnetic flux in the primary coil 7 causes the secondary coil 8 to generate induced electromotive force, thereby feeding electric power to the secondary coil 8 from the primary coil 7.

In other words, first, the secondary coil 8 is closely located to face the primary coil 7 through an air gap g. When applying an alternating current to the primary coil 7 as an exciting current, a magnetic field is generated around a conducting wire of the primary coil 7 to form a magnetic flux in the direction perpendicular to the surface of the primary coil 7.

The magnetic flux formed in the primary coil 7 goes through the secondary coil 8 for interlinkage to generate induced electromotive force on the secondary coil 8. The magnetic field is formed in this way and electric power is fed and received using the magnetic field.

In this manner, a magnetic circuit of the magnetic flux is provided, that is, a magnetic path is formed between the magnetic circuit of magnetic flux on the primary coil 7 side and the magnetic circuit of magnetic flux on the secondary coil 8 side for electromagnetic coupling.

In the non-contact power feeding device A, power feeding is performed based on the mutual induction effect of electromagnetic induction.

### (General structure etc. of the primary side 1 and the secondary side 2)

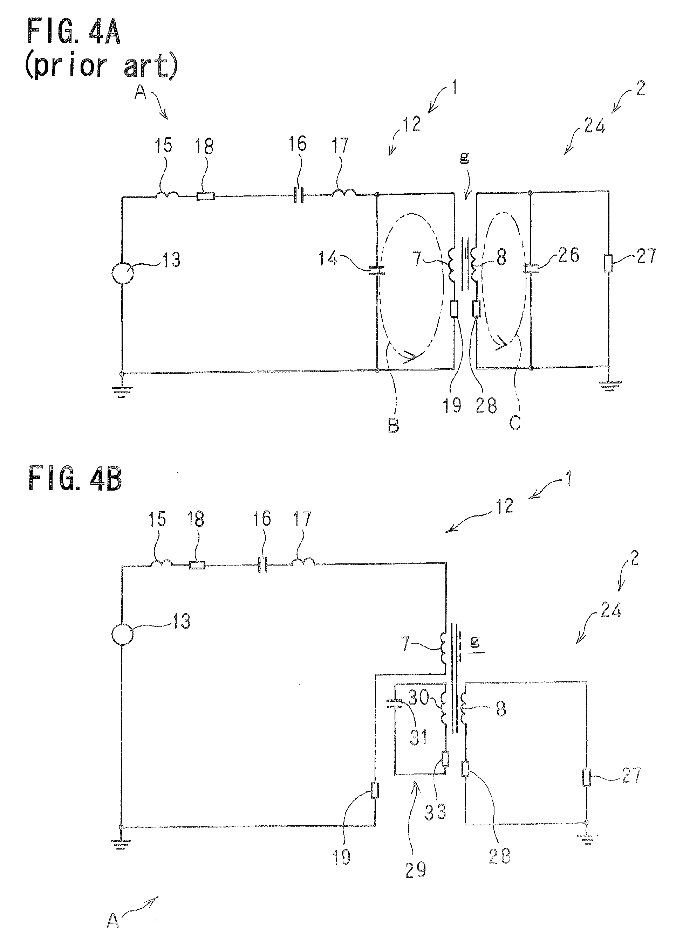

Next, a general structure etc. of the primary side 1 and the secondary side 2 of the non-contact power feeding device A will be described based on a conventional technology with reference to Fig. 4A.

First, the primary side 1 will be described. As shown in a basic circuit of a conventional technology of Fig. 4A, in a power circuit 12 on the primary side 1 fixedly secured to the ground 3 or disposed on another part above ground, the primary coil 7 is connected to a power source 13. For the power source 13, a high frequency inverter of somewhere around several kHz to 60 kHz, for example, a high frequency inverter of 20 kHz to 30 kHz is used.

In the conventional technology, unlike the present invention, for the power circuit 12, a resonant circuit of a loop B has been provided by the primary coil 7 and a parallel capacitor 14. Further, in the conventional technology, in the resonant circuit of the loop B, exciting active power and exciting reactive power have been fed to a magnetic path of the air gap g.

In Fig. 4a, reference numeral 15 is an inductor for limiting a higher harmonic component of power feeding alternating current, reference numerals 16 and 17 are a capacitor and an inductor constituting a series primary resonant circuit, 18 is a circuit resistance, and 19 is a coil resistance of the primary coil 7.

As shown in Fig. 5, the primary coil 7 is formed in a flat structure with a plurality of turns in a substantially tabular shape. In other words, the primary coil 7 is provided in such a manner that insulated coil conducting wires are spirally wound more than once in a round or square shape while maintaining a parallel position relationship in which conducting wires are arranged in a line in the same plane surface. The primary coil 7 is provided by counting a singular number of or a plurality of coil conducting wires as one unit. In an example (embodiment) of Fig. 5, three (3) coil conducting wires are composed as one unit.

In this manner, the primary coil 7 is formed in a thin flat structure which has no undulation as a whole and is also formed in a circular shape, in other words, in a substantially flange shape, wherein a space is formed in a central section.

For a magnetic core 20 of the primary coil 7, a ferromagnetic body such as a ferrite core is used. The magnetic core 20 increases inductance between the primary coil 7 and the secondary coil 8 to strengthen the electromagnetic coupling between them and induces, collects and directs the formed magnetic flux. The magnetic core 20 has a larger area than the primary coil 7 and is formed in a flat, tabular and circular shape, in other words, in a substantially flange shape. The magnetic core 20 is disposed in a concentric pattern with the primary coil 7.

In Fig. 5, reference numeral 21 is a molded resin, 22 is foamed materials, and 23 is a base plate. The molded resin 21 is used to fixedly position the primary coil 7 and the magnetic core 20, while the foamed materials are used for weight saving and the like.

Next, the secondary side 2 will be described. First, in view of the fact that the secondary coil 8 on the secondary side 2 and the magnetic core 25 are a stop-type power feeding method, they conform to the primary coil 7 on the primary side 1 and the magnetic core 20. The molded resin 21, the foamed materials 22, the base plate 23, etc. also conform to those on the primary side 1. The winding diameter of the secondary coil 8 is the same as that of the primary coil 7, but the number of windings is different from that of the primary coil 7.

As shown in Fig. 4A, the conventional technology, unlike the present invention, has been provided with a resonant circuit of a loop C by the secondary coil 8 and a parallel capacitor 26 in a load side circuit 24 on the secondary side 2 mounted on an electric vehicle 4 or other moving body. In such a conventional technology, exciting reactive power has been fed to a magnetic path of the air gap g by this resonant circuit of loop C as in the loop B on the primary side 1 described above.

In Fig. 4A, reference numeral 27 is a load resistance and 28 is a coil resistance of the secondary coil 8.

The general structure etc. of the primary side 1 and the secondary side 2 are as described above.

Fig. 4B is an explanatory circuit diagram of an embodiment of the present invention as described later. In Fig. 4B, the component parts conforming to Fig. 4A are given the same reference numerals and their descriptions are omitted.

### (Outline of the present invention)

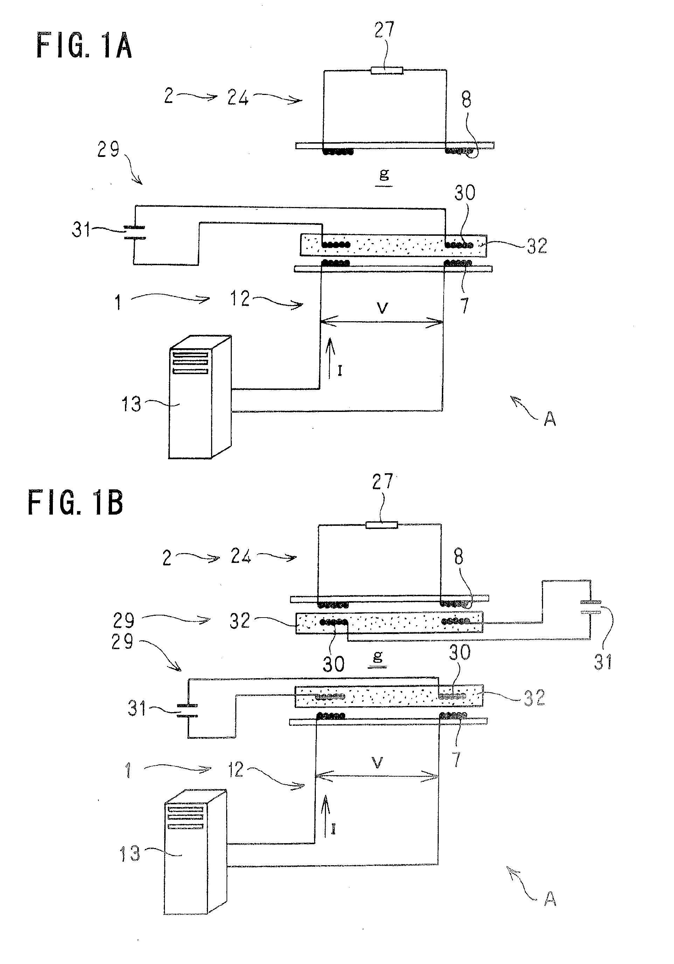

The present invention will now be described with reference to Figs. 1 through 3. First, an outline of the present invention will be described.

As described above, the non-contact power feeding device A of the present invention is provided to feed electric power from the primary coil 7 of the power circuit 12 on the primary side 1 to the secondary coil 8 of the load side circuit 24 on the secondary side 2, which are closely located to face each other with no contact through an air gap g, based on a mutual induction effect of electromagnetic induction.

In such a non-contact power feeding device A, the repeating resonant coil 30 serving as the resonant coil constituting the resonant circuit 29 is disposed in a magnetic path of the air gap g.

The resonant circuit 29 is independent of the power circuit 12 on the primary side 1 and the load side circuit 24 on the secondary side 2, wherein the repeating resonant coil 30 feeds exciting reactive power to the magnetic path of the air gap g. The resonant circuit 29 can independently be subjected to high voltage and be provided with insulation.

The outline of the present invention is as described above.

### (Detailed description of the present invention)

The present invention will now be described in detail. Referring to the conventional technology as shown in Fig. 4A, as described above, exciting reactive power has been fed to a magnetic path of an air gap g in a resonant circuit of a loop B which consists of a primary coil 7 on a primary side 1 and a capacitor 14. Further, in the conventional technology, exciting reactive power has been fed to the magnetic path of the air gap g from the resonant circuit of a loop C which consists of the secondary coil 8 on the secondary side 2 and a capacitor 26.

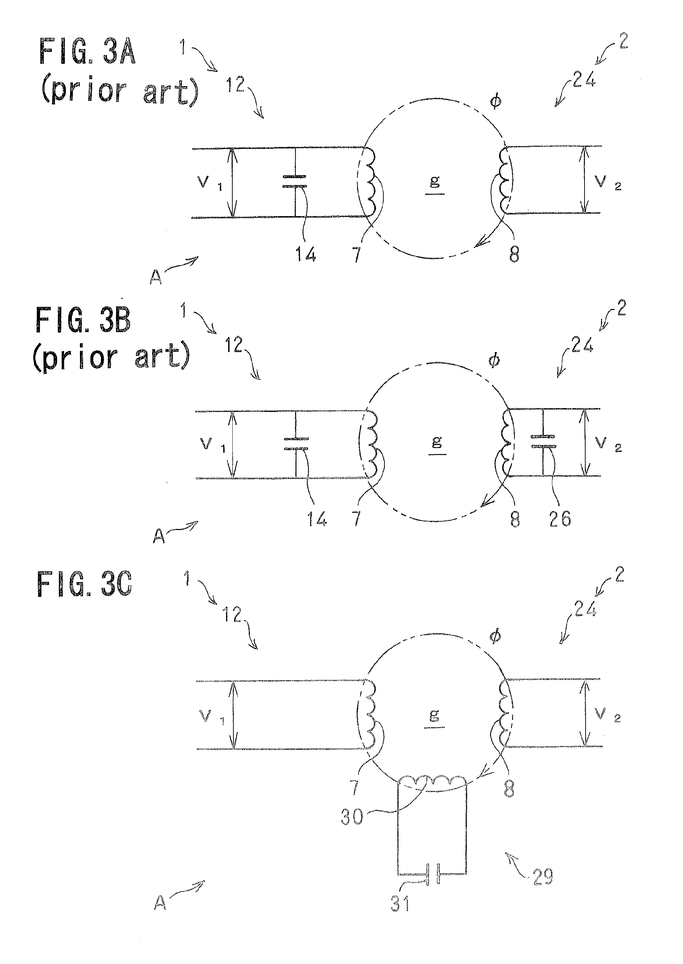

Figs. 3A and 3B are provided to describe the conventional technology using a magnetic circuit, wherein Fig. 3B corresponds to the conventional technology of Fig. 4A.

First, exciting current is applied between the primary coil 7 and the secondary coil 8 of the non-contact power feeding device A to form a magnetic path of a magnetic flux *φ*. The product of this exciting current and counter electromotive force generated by the magnetic flux *φ* is also exciting reactive power.

This exciting reactive power is expressed by "coil voltage x coil current", but in the conventional technology of Fig. 3A, it has been fed by the resonant primary coil 7. In the conventional technology of Fig. 3B, the exciting reactive power has also been fed by the resonant secondary coil 8 as well as the resonant primary coil 7..

On the contrary, the magnetic circuit of Fig. 3C according to the present invention is as follows. A magnetic circuit of the present invention is shown in Fig. 3C by extracting only a resonant section from the magnetic circuit of the conventional technology as shown in Figs. 3A and 3B.

In the present invention, a completely independent resonant circuit 29 is provided without being connected to the power circuit 12 on the primary side 1 and the load side circuit 24 on the secondary side 2. This resonant circuit 29 is provided with a resonant coil, that is, a repeating resonant coil 30 and a capacitor 31. The composition of the repeating resonant coil 30, specifically, the insulated coil conducting wire, the flat structure, etc. conform to the description of the primary coil 7 and the secondary coil 8.

In the present invention, when the repeating resonant coil 30 is disposed in a magnetic path of the air gap g formed between the primary coil 7 and the secondary coil 8, a large amount of exciting reactive power is fed to the magnetic path from this repeating resonant coil 30.

For example, for the primary coil 7 and the repeating resonant coil 30, if the degree of electromagnetic coupling between their magnetic circuits, that is, the coupling coefficient is 1 and the winding diameter and the number of windings of both the primary coil 7 and the repeating resonant coil 30 are the same, the electric properties as seen from the secondary coil 8 of the magnetic circuit of the present invention in Fig. 3C are completely the same as those seen from the secondary coil 8 of the magnetic circuit of the conventional technology shown in Fig. 3A. In other words, both circuits are equivalent as seen from the secondary coil 8.

However, in the present invention, by removing only the resonant circuit 29 from the constraint up to the rated voltage of 600 V, it is possible to increase the exciting reactive power in excess of the conventional technology as shown in Figs. 3A and 3B which is under the constraint up to the rated voltage of 600 V In other words, it is possible to obtain a large amount of exciting reactive power by making the voltage of only the resonant circuit 29 much higher than 600 V while making the voltage of the power circuit 12 and the load side circuit 24 much lower than 600 V

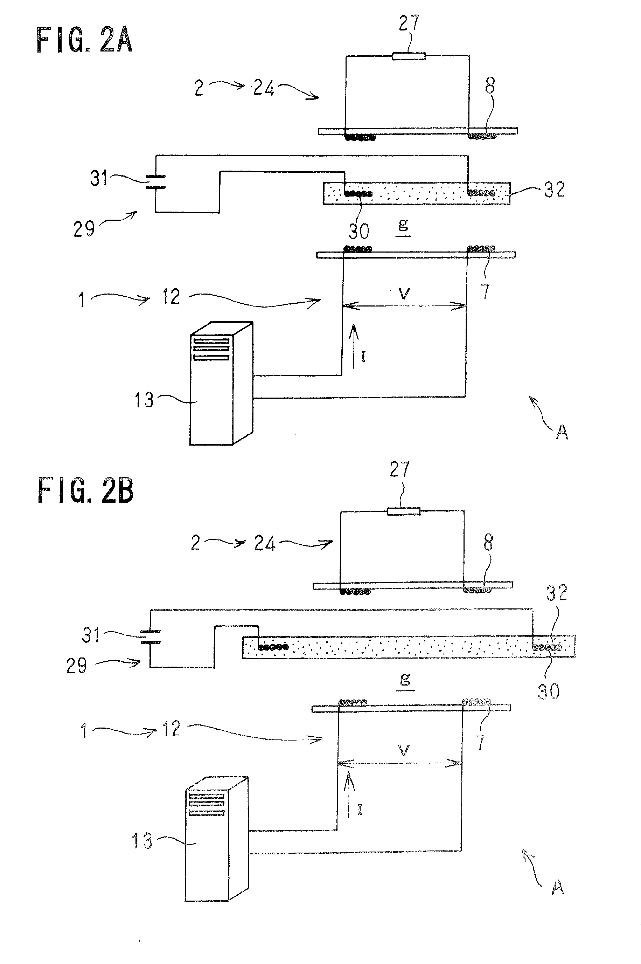

Meanwhile, the repeating resonant coil 30 selectively adopted in the present invention is spirally wound conforming to the primary coil 7 and the secondary coil 8 to provide a circular flat structure as a whole. The repeating resonant coil 30 is totally positioned and held by a molded resin 32 (refer to Figs. 1 and 2)

The non-contact power feeding device A of the present invention is typically applied to a stop-type power feeding method whereby the secondary coil 8 is located to stop above the primary coil 7 through the repeating resonant coil 30 in the case of power feeding.

The details of the present invention are as described above.

### (Each embodiment of the present invention)

Each embodiment of the present invention will now be described with reference to Figs. 1 and 2. In the first embodiment of the present invention shown in Fig. 1A, the resonant circuit 29 and the repeating resonant coil 30 are disposed on the primary coil 7 side.

In other words, in the non-contact power feeding device A of the first embodiment, the resonant circuit 29 such as the repeating resonant coil 30 is disposed on the primary side 1, the power feeding side and the ground 3 side, which is a typical example (refer to Fig. 7). The typical example of the present invention is to intensively dispose the resonant circuit 29 on the primary side 1 without separately disposing the same on the secondary side 2, the power receiving side and the electric vehicle 4 side.

Contrary to the first embodiment as shown in Fig. 1A, it can also be considered that the resonant circuit 29 and the repeating resonant coil 30 are disposed on the secondary coil 8 side. In other words, it can also be considered that there is a case where the resonant circuit 29 is not disposed on the primary side 1 or there is a case where the resonant circuit 29 is disposed, but there is deficiency in performance. Accordingly, in order to meet such case, there is also the need that the resonant circuit 29 be disposed on the secondary side 2.

As shown in the second embodiment (refer to Fig. 1B) of the present invention, it can also be considered that the resonant circuit 29 and the repeating resonant coil 30 are disposed on both the primary side 1 and the secondary side 2. In the non-contact power feeding device A according to the second embodiment, there are provided two resonant circuits 29, wherein the repeating resonant coil 30 of one resonant circuit 29 is disposed on the primary coil 7 side, while the repeating resonant coil 30 of another resonant circuit 29 is disposed on the secondary coil 8 side.

Next, in the non-contact power feeding device A according to the third embodiment of the present invention as shown in Fig. 2A, the repeating resonant coil 30 can be disposed in an approximately intermediate position between the primary side 1 and the secondary side 2.

In this third embodiment, the resonant circuit 29 is basically disposed on the primary side 1 and the power feeding side, wherein, in the case of power feeding, the repeating resonant coil 30 is inserted between the primary coil 7 and the secondary coil 8 which is located to stop above the primary coil 7.

With this arrangement, the repeating resonant coil 30 of the third embodiment can be properly used according to need. The resonant coil 30 of the third embodiment is used, for example, when a ground height of an electric vehicle 4 etc. on the secondary side 2 is too high to make an air gap g between the primary coil 7 and the secondary coil 8 wider.

Next, in the fourth embodiment of the present invention as shown in Fig. 2B, the repeating resonant coil 30 is provided in such a manner that the winding diameter is made larger than those of the primary coil 7 and the secondary coil 8.

In other words, in the non-contact power feeding device A of the present invention, the primary coil 7, the secondary coil 8, the repeating resonant coil 30, etc. are respectively wound to provide a circular flat structure, but in this fourth embodiment, the winding diameter of the repeating resonant coil 30 is made larger than those of the primary coil 7 and the secondary coil 8.

However, unlike the fourth embodiment, the repeating resonant coil 30 can be provided in such a manner that the winding diameter is made larger than that of either the primary coil 7 or the secondary coil 8.

Anyway, in the non-contact power feeding device A according to the fourth embodiment etc., by making the winding diameter of the repeating resonant coil 30 larger, a magnetic path of the magnetic flux *φ* of the air gap g can be made wider relative to the primary coil 7 or/and the secondary coil 8, in the vertical and horizontal directions, that is, in the X and Y directions, of the embodiments as shown in Figs. 6B and 7.

Such a structure making the winding diameter of other repeating resonant coils 30 in the fourth embodiment etc. larger can of course be applied to each embodiment described above.

Each embodiment of the present invention is as described above.

### (Operation etc.)

The non-contact power feeding device A of the present invention is constructed as described above. Operation etc. of the present invention will now be described in the following items (1) through (9).
(1) In the non-contact power feeding device A, in the case of power feeding, a power receiving side, that is, a secondary side 2 mounted on a moving body such as an electric vehicle 4 is closely located to face, through an air gap g, a power feeding side, that is, a primary side 1 such as a power feeding stand 5 which is fixedly secured to the ground 3, a road surface, a floor surface or another part above ground.

The non-contact power feeding device A typically consists of a stop-type power feeding method whereby the secondary coil 8 is positioned to stop above the primary coil 7 (refer to Figs. 6B and 7).
(2) On the primary side 1 of the non-contact power feeding device A, electricity is applied to the primary coil 7 by a power source 13 of a power circuit 12 which is an exciting circuit.

A magnetic flux *φ* is formed on the primary coil 7 by the electric conduction of a high frequency alternating current as an exciting current, wherein a magnetic path of the magnetic flux *φ* is formed between the primary coil 7 and the secondary coil 8 (refer to Fig. 3C).
(3) In this manner, the primary coil 7 and the secondary coil 8 are electromagnetically coupled to form a magnetic field between them. The magnetic flux *φ* formed by the primary coil 7 passes through the secondary coil 8 to generate induced electromotive force on the secondary coil 8.
(4) In the non-contact power feeding device A, power is fed from the power circuit 12 on the primary side 1 to a load side circuit 24 on the secondary side 2 by a mutual induction effect of electromagnetic induction (refer to Fig.4B). In this manner, a battery 6 on the secondary side 2 is charged (refer to Figs. 6B and 7).
(5) In the non-contact power feeding device A of the present invention, the repeating resonant coil 30 of the resonant circuit 29 is disposed in a magnetic path of the air gap g (refer to Figs. 1, 2, 3C and 4B).

In other words, the repeating resonant coil 30 of the resonant circuit 29 is disposed, as a third coil, in a magnetic path of the magnetic flux *φ* formed in the air gap g between the primary coil 7 and the secondary coil 8.
(6) In the non-contact power feeding device A of the present invention, in the case of power feeding, a capacitor 31 of the resonant circuit 29 resonates with the repeating resonant coil 30, whereby exciting reactive power is fed to the magnetic path of the air gap g from the repeating resonant coil 30.

Accordingly, it is possible to cope with the increase of exciting reactive power according to expansion of the air gap g by making the voltage and current of only the resonant circuit 29 higher.
(7) According to the present invention, promotion of the non-contact power feeding device A can be realized by expansion of the air gap g.

In the present invention, a large amount of power can be fed from the primary side 1 to the secondary side 2 through the large air gap g by making the voltage of only the resonant circuit 29 high without making high the voltage of the power circuit 12 on the primary side 1 and the load side circuit 24 on the secondary side 2 as in the conventional technology.. (8) In the non-contact power feeding device A of the present invention, the above item (7) can be readily realized by adopting the resonant circuit 29 of a simple structure which consists of the repeating resonant coil 30 and the capacitor 31. It is also easy to insulate the resonant circuit 29.

Since the repeating resonant coil 30 is composed of a flat structure, it can be smoothly combined and disposed between the primary coil 7 and the secondary coil 8 which are also composed of the flat structure.

In this manner, it is possible to meet various disposition needs because the resonant circuit 29 such as the repeating resonant coil 30 can be disposed on the primary side 1, on the secondary side 2, on both the primary side 1 and the secondary side 2, or it can be detachably disposed in an approximately intermediate position between the primary side 1 and the secondary side 2 (refer to Figs. 1 and 2). (9) In the case where the winding diameter of the repeating resonant coil 30 is set larger than that of the primary coil or/and the secondary coil 8 (refer to Fig. 2B), the magnetic path of the air gap g can be set wider.

With this arrangement, it is possible to broaden the tolerance of relative displacement in the X and Y directions between the primary coil 7 and the secondary coil 8 and the tolerance of vertical and horizontal displacement in the embodiments of Figs. 6B and 7. Even in the case where the primary coil 7 and the secondary coil 8 are dimensionally displaced a little vertically or horizontally, steady power feeding can be realized by having the repeating resonant coil 30 of a larger winding diameter intervening between them.

Operation etc. of the present invention is as described above.

### (Description of a preferred embodiment)

A preferred embodiment of the non-contact power feeding device A according to the present invention will be described. Fig. 4B is an explanatory circuit diagram of this embodiment.

First, each constituent condition is as follows:
Power source 13 (Inverter): Current 35A; Voltage 200 V; Frequency 71.7 kHz
Primary coil 7: Winding diameter 1 m; 3 turns
Inductance of the primary coil 7: 20.25 *µ* H
Secondary coil 8: Winding diameter 1 m; 3 turns
Inductance of the secondary coil 8: 20.25 *µ* H
Repeating resonant coil 30 of a resonant circuit 29: Winding diameter 1 m; 6 turns
Inductance of the repeating resonant coil 30: 81 *µ* H
Coupling coefficient between the primary coil 7 and the repeating resonant coil 30: 0.3
Coupling coefficient between the primary coil 7 and the secondary coil 8: 0.2
Air gap g between the primary coil 7 and the secondary coil 8: 300 mm

Others:
Inductor 15: 19 *µ* H
Capacitor 16: 4 *µ* F
Inductor 17: 2.6 *µ* H
Circuit resistance 18 of power circuit 12: 10 mΩ
Coil resistance 19 of the primary coil 7: 10 mΩ
Coil resistance 28 of the secondary coil 8: 10 mΩ
Coil resistance 33 of the repeating resonant coil 30: 10 mΩ
Capacitor 31: 65 nF
Load resistance 27: 9 Ω

As a result of performing non-contact power feeding under these constituent conditions, the following results were obtained.
Output: 6 kW
Load voltage: 200 V
Voltage of the primary coil 7: 280 V
Electric current of the repeating resonant coil 30: 110 A
Voltage of the repeating resonant coil 30: 3.6 kV

With these results, the exciting reactive power generated by the repeating resonant coil 30 of the resonant circuit 29 was: 3.6 kV x 110 A = 396 kVA

This exciting reactive power was fed to the magnetic path of the air gap g of 300 mm and as a result, output of 200 V and 6 kW was obtained. In other words, active power generated at the load resistance 27 of the load side circuit 24 on the secondary side 2 became 6 kW.

In this manner, in the non-contact power feeding device A of the present invention A, we succeeded in feeding a large amount of power an order of several kW under the air gap g of 300 mm, but so far it is unreported that such a large amount of power was fed in the device of this kind.

The preferred embodiment is as described above.

### Explanation of reference numerals

1: Primary side; 2: Secondary side; 3: Ground; 4: Electric vehicle; 5: Power feeding stand; 6: Battery; 7: Primary coil; 8: Secondary coil; 9: Motor; 10: Converter; 11: Inverter; 12: Power circuit; 13: Power source; 14: Capacitor; 15: Inductor; 16: Capacitor; 17: Inductor; 18: Circuit resistance; 19: Coil resistance; 20: Magnetic core; 21: Molded resin; 22: Foamed Materials; 23: Base plate; 24: Load side circuit; 25: Magnetic core; 26: Capacitor; 27: Load resistance; 28: Coil resistance; 29: Resonant circuit; 30: Repeating resonant coil (Resonant coil); 31: Capacitor; 32: Molded resin; 33: Coil resistance; A: Non-contact electric power feeding device; B: Loop; C: Loop; g: Air gap; *φ* : Magnetic flux

## Claims

1. A non-contact power feeding device(A) adapted to feed power from a primary coil(7) of a power circuit(12) on a primary side(1) to a secondary coil(8) of a load side circuit(24) on a secondary side(2), which are closely located to face each other with no contact through an air gap(g), based on a mutual induction effect of electromagnetic induction, **characterized in that** a resonant coil(30) constituting a resonant circuit(29) is disposed in a magnetic path of the air gap(g).

2. The non-contact power feeding device(A) according to claim 1, wherein the resonant circuit(29) is independent of the power circuit(12) on the primary side(1) and the load side circuit(24) on the secondary side(2), the resonant coil(30) of the resonant circuit(29) feeds exciting reactive power to the magnetic path of the air gap(g), and the resonant circuit(29) can independently be subjected to a high voltage and be provided with insulation.

3. The non-contact power feeding device(A) according to claim 2, wherein the primary coil(7) and the secondary coil(8) are spirally wound to provide a circular flat structure with a round or square shape, a magnetic core(20,25) on the primary side(1) and the secondary side(2) is also formed to provide a similar flat structure, and the resonant coil(30) is also formed to provide a similar flat structure, wherein the non-contact power feeding device(A) consists of a stop-type power feeding method whereby the secondary coil(8) is located to stop facing the primary coil(7) in the case of power feeding.

4. The non-contact power feeding device(A) according to claim 3, wherein the resonant coil(30) is disposed on the primary coil(7) side.

5. The non-contact power feeding device(A) according to claim 3, wherein the resonant coil(30) is disposed on the secondary coil(8) side.

6. The non-contact power feeding device(A) according to claim 3, wherein the resonant coil(30) can be disposed in an approximately intermediate position between the primary coil(7) and the secondary coil(8).

7. The non-contact power feeding device(A) according to claim 3, wherein the resonant circuit(29) is disposed on both the primary coil(7) side and the secondary coil(8) side.

8. The non-contact power feeding device(A) according to claim 3, wherein the resonant coil(30) is provided in such a manner that the winding diameter is set larger than that of the primary coil(7).

9. The non-contact power feeding device(A) according to claim 3, wherein the resonant coil(30) is provided in such a manner that the winding diameter is set larger than that of the secondary coil(8).

10. The non-contact power feeding device(A) according to claim 3, wherein the power circuit(12) on the primary side(1) is fixedly grounded or disposed on another part above ground(3), while the load side circuit(24) on the secondary side(2) is mounted on a vehicle or other moving body.
